# EUROPÄISCHE PATENTSCHRIFT

(11) **EP 0 932 475 B1**
(45) Veröffentlichungstag und Bekanntmachung des Hinweises auf die Patenterteilung: **02.05.2001**
(21) Anmeldenummer: 97912182.9
(22) Anmeldetag: 15.10.1997
(51) Int. Cl.: B23Q 7/14

(54) **VORRICHTUNG ZUM BE- UND ENTLADEN VON WERKZEUGMASCHINEN**
MACHINE TOOL LOADING AND UNLOADING DEVICE
DISPOSITIF POUR LE CHARGEMENT ET LE DECHARGEMENT DE MACHINES-OUTILS

(30) Priorität: 16.10.1996 DE 19642763
(43) Veröffentlichungstag der Anmeldung: 04.08.1999
(73) Patentinhaber: Erwin Junker Maschinenfabrik GmbH, 77787 Nordrach (DE)
(72) Erfinder: JUNKER, Erwin, D-77787 Nordrach (DE)
(74) Vertreter: Leske, Thomas, Dr.
(86) Internationale Anmeldenummer: EP9705658
(87) Internationale Veröffentlichungsnummer: WO9816346

(56) Entgegenhaltungen:
- EP-A- 0 473 910
- WO-A-86/03179
- DE-A- 3 413 255
- DE-A- 3 614 165
- US-A- 5 364 219

## Beschreibung

Die Erfindung betrifft eine Vorrichtung zum Be- und Entladen von Werkzeugmaschinen mit den Meskmalen des Oberbegriffs des Anspruchs 1 (siehe EP-A-473 910).

Bisher ist bekannt, daß mit ortsfesten Be- und Entladevorrichtungen, z.B. mit Ladeportalen/Robotern oder mit Sonderladesystemen gearbeitet wird, die speziell für eine Bearbeitungsmaschine oder eine Bearbeitungsaufgabe konzipiert sind. Dies ist insbesondere dann aufwendig und kostenträchtig, wenn bei Werkstücken die Bearbeitungszeiten in einem Bereich liegen, daß eine separate Ladeeinheit für das Werkstück nicht ausgelastet ist.

In der US-PS 5,364,219 ist eine Vorrichtung beschrieben, die in der Reinraum-bzw. Vakuumtechnik bei der Herstellung von Halbleitern zum Einsatz kommt. Dabei wird eine erste in einer Bearbeitungseinheit untergebrachte Vakuurnkammer mit einer zweiten, in einem verfahrbaren Kasten untergebrachten Vakuumkammer gekoppelt. Nach dem Ankoppeln wird durch eine Schleuse eine Verbindung zwischen den beiden Vakuumkammern hergestellt. Der Kasten ist dabei auf Schienen innerhalb eines Reinraumes verfahrbar. Ziel ist. daß eine Vakuumkammer bedient wird, ohne daß sich das Vakuum mit Raumluft anreichern kann. Dazu ist es zwingend erforderlich. die Vakuumkammern gegen die Umgebungsluft abzudichten.

Die EP-A-473 910 offenbart eine Vorrichtung zum Be- und Entladen von Werkzeugmaschinen, wobei eine über Rollen auf einem Hallenboden verfahrbaren Ladeeinheit an eine Werkzeugmaschine durch mindestens eine Fixiervorrichtung an- und abkoppelbar ist. Dabei ist ein Teil der Fixiervorrichtung an der Werkzeugmaschine und ein damit zusammenwirkender Teil an der Ladeeinheit angebracht.

Der Erfindung liegt die Aufgabe zugrunde, eine Vorrichtung zum Be- und Entladen von Werkzeugmaschinen so auszubilden, daß ein rationeller Einsatz der Vorrichtung möglich ist.

Diese Aufgabe wird mit den im Anspruch 1 angegebenen Merkmalen gelöst.

Erfindungsgemäß kann die Ladeeinheit auch für mehrere Werkzeugmaschinen verwendet werden, weil durch die Fixiervorrichtung ein Ankoppeln der Ladeeinheit an eine beliebige Werkzeugmaschine möglich ist. Die Werkstücke können also zu verschiedenen Werkzeugmaschinen transportiert werden. Dies ist vor allem dann von Vorteil, wenn auf einer Werkzeugmaschine nur eine Teilbearbeitung von Werkstücken durchgeführt wird. Vorteilhaft ist ferner, daß beim Arbeiten mit hohen Stückzahlen die Werkzeugmaschine automatisch beladen werden kann, ohne daß die Möglichkeit ausgeschlossen wird, bei Einzelwerkstücken die Maschine per Hand zu beladen und in dieser Zeit die Ladeeinheit an einer anderen Maschine einzusetzen.

Vorteilhafte weitere Ausführungsformen der im Anspruch 1 beschriebenen Vorrichtung sind Gegenstand der Unteransprüche.

Die Erfindung wird im folgenden an Hand von in der Zeichnung dargestellten Ausführungsbeispielen näher erläutert. Es zeigt:
- Fig. 1: eine Seitenansicht der Be- und Entladevorrichtung freistehend vor einer Werkzeugmaschine;
- Fig. 2: eine Seitenansicht der Be- und Entladevorrichtung nach ihrem Anheben;
- Fig. 3: eine Seitenansicht der Be- und Entladevorrichtung nach dem Ankoppeln an der Werkzeugmaschine;
- Fig. 4: eine Seitenansicht der Be- und Entladevorrichtung in einer anderen Ausführungsform;
- Fig. 5: schematisch den Einsatz der Be- und Entladevorrichtung an mehreren Maschinen.

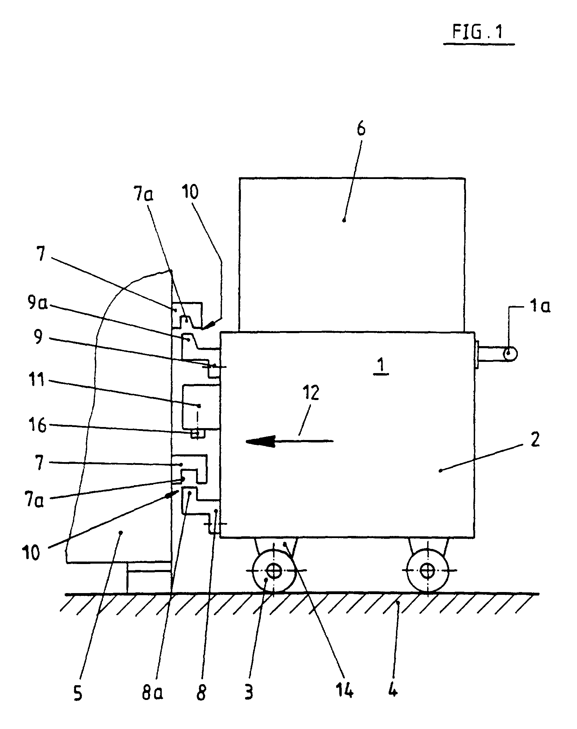

Die Ladeeinheit 1 ist gemäß Fig. 1 als eigenständiges Ladesystem ausgeführt und kann an verschiedene Werkzeugmaschinen angekoppelt werden. Diese Werkzeugmaschinen 5 können gleiche oder unterschiedliche Bearbeitungsaufgaben erfüllen.

Die Ladeeinheit 1 besteht aus einem Grundgestell 2, das über Rollen 3 auf dem Hallenboden 4 zu einer Werkzeugmaschine 5 transportiert wird. Die Ladeeinheit 1 kann manuell unter Benutzung eines Handgriffs la zu den einzelnen Werkzeugmaschinen 5 transportiert werden oder ist als Flurförderfahrzeug ausgebildet. Eine Ladevorrichtung 6 ist auf dem Grundgestell 2 montiert.

Im Frontbereich der Werkzeugmaschine 5 befinden sich Fixierstücke 7, an denen die Ladeeinheit 1 fest fixiert werden kann. Gegenstücke 8, 9 sind am Grundgestell 2 der Ladeeinheit 1 montiert. Ein Fixierstück 7 bildet mit dem Gegenstück 8 bzw. 9 eine Fixiervorrichtung 10. Die Fixierstücke 7 haben unten Schlitze 7a zum Einführen eines nach oben gerichteten Stegs 8a bzw. 9a am Gegenstück 8 bzw. 9. Das Gegenstück 9 ist als Festlagereinheit ausgeführt, das Gegenstück 8 als Loslagereinheit.

Zum Spannen der Ladeeinheit 1 in den Fixiervorrichtungen 10 ist eine Spanneinheit 11 vorgesehen, die an der Ladeeinheit 1 befestigt ist.

In Fig. 1 ist durch den Pfeil 12 dargestellt, wie die Ladeeinheit 1 vor die Werkzeugmaschine 5 geschoben wird.

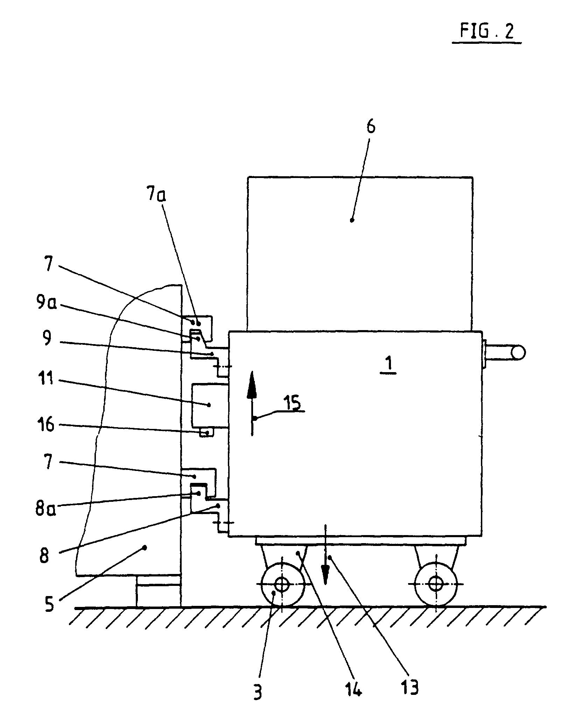

In Fig. 2 ist dargestellt, wie die Ladeeinheit 1 durch vertikales Ausfahren der Rollenlager 14 in Richtung des Pfeils 13 senkrecht in Richtung des Pfeils 15 angehoben wird.

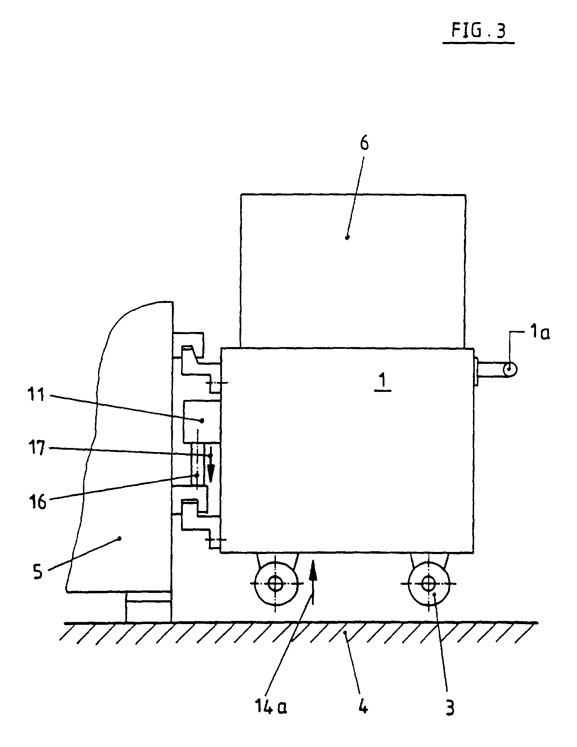

Nachdem die Ladeeinheit 1 senkrecht soweit angehoben ist, daß die Fixiervorrichtungen 10 formschlüssig schließen, kann die Ladeeinheit an der Werkzeugmaschine fest fixiert werden. Dies ist in Fig. 3 dargestellt. Aus dieser Figur ist zu ersehen, daß die Spanneinheit 11 zum lagefixierten Koppeln der Ladeeinheit 1 mit der Werkzeugmaschine 5 dient. Die Spanneinheit 11 hat ein Spannelement 16, das beispielsweise in Richtung des Pfeils 17 ausfahrbar ist und sich auf der Oberseite des unteren Fixierstücks 7 abstützt. Nach dem Fixieren der Ladeeinheit 1 im angekoppelten Zustand werden die Rollenlager 14 in Richtung des Pfeils 14a vom Hallenboden 4 abgehoben, so daß die komplette Ladeeinheit 1 nur noch an der Werkzeugmaschine 5 hängt.

Das Lösen der Ladeeinheit 1 von der Werkzeugmaschine 5 erfolgt in umgekehrter Reihenfolge.

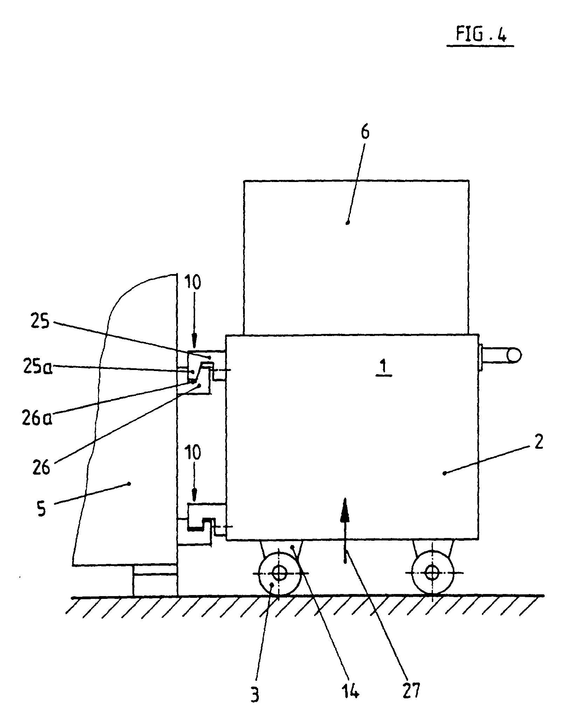

In Fig. 4 ist eine weitere Ausführungsform für das Fixieren der Ladeeinheit 1 an einer Werkzeugmaschine 5 dargestellt. Bei dieser Ausführungsform kann ähnlich wie bei dem System gemäß den Fig. 1 bis 3 vorgegangen werden. Die Fixiervorrichtungen 10 bestehen hier aus an der Werkzeugmaschine 5 befestigten Fixierstücken 26 mit nach oben gerichteten Schlitzen 26a, die mit nach unten gerichteten Stegen 25a an Gegenstücken 25 zusammenwirken, die an der Ladeeinheit 1 befestigt sind. Nach dem Anheben der Ladeeinheit in Richtung des Pfeils 27 durch Ausfahren der Rollenlager 14 werden die Stege 25a über die Schlitze 26a gebracht, und durch Absenken der Ladeeinheit 1 kommen die Stege 25a in Eingriff mit den Schlitzen 26a. Sobald dies geschehen ist, kann auch hier durch Einfahren der Rollenlager 14 dafür gesorgt werden, daß die Ladeeinheit 1 an der Werkzeugmaschine 5 hängt. Auf eine Spanneinheit 11, wie sie in den Fig. 1 bis 3 dargestellt ist, kann hier verzichtet werden, da das System allein durch das Gewicht der Ladeeinheit 1 fest fixiert ist.

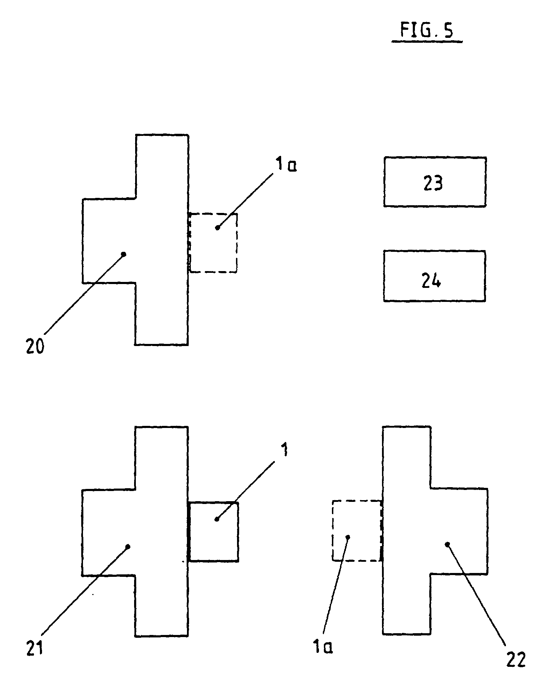

In Fig. 5 ist die Anwendung der Ladeeinheit 1 für mehrere Werkzeugmaschinen 20, 21, 22 dargestellt.

Im gezeigten Zustand ist die Ladeeinheit 1 an der Maschine 21 montiert und kann diese be- und entladen. Hier gibt es nun die Möglichkeit, daß die Ladeeinheit 1 ausschließlich die Maschine 21 be- und entlädt, oder daß nach der Bearbeitung das fertig bearbeitete Werkstück auf einer an der Ladeeinheit 1 montierten Zwischenablage abgelegt wird und die gesamte Ladeeinheit entweder durch den Maschinenbediener oder als Flurförderfahrzeug zu der Maschine 20 oder 22 gelangt.

Auf diese Weise kann beispielsweise eine Fertigung realisiert werden, bei der mit einer einzigen Ladeeinheit 1 mehrere Werkzeugmaschinen be- und entladen werden können. Es besteht im Fertigungsablauf die Möglichkeit, eine Zellenlösung von mehreren Werkzeugmaschinen zu realisieren, wobei eine einzige kostengünstige Ladeeinheit 1 zum kompletten Be- und Entladen der Werkzeugmaschinen dient. Zur Fertigungszelle gehört noch ein Ort für Bevorratungsmagazine für Rohteile 23 und Fertigteile 24.

Anstatt der Ladeeinheit kann auch eine Einheit mit einer anderen Aufgabe an die Maschine angekoppelt werden. Hier ist dann auf dem gleichen Grundgestell 2 anstatt der Ladevorrichtung 6 eine Einheit mit einer anderen Funktion montiert.

## Patentansprüche

1. Vorrichtung zum Be- und Entladen von Werkzeugmaschinen, wobei
eine über Rollen auf einem Hallenboden verfahrbare Ladeeinheit (1) an eine Werkzeugmaschine (5, 20, 21, 22) durch mindestens eine Fixiervorrichtung (10), von der ein Teil an der Werkzeugmaschine und ein damit zusammenwirkender Teil an der Ladeeinheit (1) angebracht ist, ankoppelbar und von der Werkzeugmaschine nach dem Be- oder Entladen wieder abkoppelbar ist, wobei
zwei Fixiervorrichtungen (10) vorgesehen sind, die jeweils von einem an der Werkzeugmaschine (5) befestigten, eine Aufnahme aufweisenden Fixierstück (7) und von einem an der Ladeeinheit (1) befestigten, für das Zusammenwirken mit dem Fixierstück (7) bestimmten Gegenstück (8, 9) gebildet sind, **dadurch gekennzeichnet, daß** Rollenlager (14) für die beim Transport der Ladeeinheiten eingesetzten Rollen (3) gegenüber der Ladeeinheit (1) vertikal beweglich sind.

2. Vorrichtung nach Anspruch 1, dadurch gekennzeichnet, daß an jedem Fixierstück (7) unten Schlitze (7a) und am Gegenstück (8. 9) nach oben gerichtete Stege (8a, 9a) angeordnet sind und daß eine an der Ladeeinheit (1) befestigte Spanneinheit (11) vorgesehen ist, die ein ausfahrbares Spannelement (16) aufweist, welches sich auf der Oberseite eines Fixierstücks (7) abstützt.

3. Vorrichtung nach Anspruch 1, dadurch gekennzeichnet, daß an jedem Fixierstück (26) oben Schlitze (26a) und am Gegenstück (25) für den Eingriff in die Schlitze (26a) bestimmte, nach oben gerichtete Stege (25a) angeordnet sind.

4. Vorrichtung nach einem der Ansprüche 1 bis 3, dadurch gekennzeichnet, daß die Ladeeinheit (1) manuell verfahrbar ist.

5. Vorrichtung nach einem der Ansprüche 1 bis 3, dadurch gekennzeichnet, daß die als Flurförderfahrzeug ausgebildete Ladeeinheit (1) automatisch verfahrbar ist.

## Claims

1. Apparatus for loading and unloading machine tools, wherein a loading unit (1), displaceable via rollers on a factory floor, is connectable to a machine tool (5, 20, 21, 22) by at least one securing device (10), of which one part is attached to the machine tool and one part, co-operating therewith, is attached to the loading unit (1) and, after the loading or unloading, said loading unit is disconnectable again from the machine tool, two securing devices (10) being provided, which are each formed by a securing piece (7), which comprises a receiver and is mounted on the machine tool (5), and by a counter-piece (8, 9), which is intended to co-operate with the securing piece (7) and is mounted on the loading unit (1), characterised in that roller bearings (14) for the rollers (3), used for transporting the loading units, are vertically displaceable relative to the loading unit (1).

2. Apparatus according to claim 1, characterised in that slots (7a) are disposed on the base of each securing piece (7), and upwardly orientated webs (8a, 9a) are disposed on the counter-piece (8, 9), and in that a tensioning unit (11), mounted on the loading unit (1), is provided, which has an extendable tensioning element (16) which is supported on the upper side of a securing piece (7).

3. Apparatus according to claim 1, characterised in that slots (26a) are disposed at the top of each securing piece (26), and upwardly orientated webs (25a), which are intended for engagement in the slots (26a), are disposed on the counter-piece (25).

4. Apparatus according to one of claims 1 to 3, characterised in that the loading unit (1) is manually displaceable.

5. Apparatus according to one of claims 1 to 3, characterised in that the loading unit (1), which is configured as a load conveyor, is automatically displaceable.

## Revendications

1. Dispositif destiné au chargement et au déchargement de machines-outils, dans lequel une unité de chargement (1), déplaçable sur un sol d'atelier par l'intermédiaire de galets de roulement, peut être amarrée à une machine-outil (5, 20, 21, 22) par au moins un dispositif de fixation (10) dont une partie est installée sur la machine-outil tandis que l'autre partie, coopérant avec celle-ci, est montée sur l'unité de chargement (1), qui peut de nouveau être désolidarisée de la machine-outil après l'opération de chargement ou de déchargement, et dans lequel il est prévu deux dispositifs de fixation (10), qui consistent chacun en une pièce de fixation (7), présentant un logement et fixée sur la machine-outil (5), et en une pièce faisant pendant (8, 9), destinée à coopérer avec la pièce de fixation (7) et fixée sur l'unité de chargement (1), caractérisé en ce que des supports de galets de roulement (14) pour les galets de roulement (3), utilisés lors du transport des unités de chargement, sont verticalement mobiles par rapport à l'unité de chargement (1).

2. Dispositif selon la revendication 1, caractérisé en ce qu'il est prévu, sur chaque pièce de fixation (7), des fentes (7a) dans le bas et, sur la pièce faisant pendant (8, 9), des barrettes (8a, 9a) dirigées vers le haut, et en ce qu'il est également prévu une unité de serrage (11), fixée sur l'unité de chargement (1) et présentant un élément mobile de serrage (16), qui prend appui sur le côté supérieur d'une pièce de fixation (7).

3. Dispositif selon la revendication 1, caractérisé en ce qu'il est prévu, sur chaque pièce de fixation (26), des fentes (26a) dans le haut et, sur la pièce faisant pendant (25), des barrettes (25a) dirigées vers le bas et destinées à s'engager dans les fentes (26a).

4. Dispositif selon l'une des revendications 1 à 3, caractérisé en ce que l'unité de chargement (1) peut être déplacée à la main.

5. Dispositif selon l'une des revendications 1 à 3, caractérisé en ce que l'unité de chargement (1), conçue en tant que chariot de manutention, peut être déplacée de manière automatique.
